(19) Europäisches Patentamt
European Patent Office
Office européen des brevets

(11) **EP 2 935 814 B1**

(12) **FASCICULE DE BREVET EUROPEEN**

(45) Date de publication et mention
de la délivrance du brevet:
**04.01.2017 Bulletin 2017/01**

(21) Numéro de dépôt: **13789528.0**

(22) Date de dépôt: **07.11.2013**

(51) Int Cl.:
*F01N 3/08* *(2006.01)*     *F01N 11/00* *(2006.01)*

(86) Numéro de dépôt international:
**PCT/EP2013/073243**

(87) Numéro de publication internationale:
**WO 2014/095154 (26.06.2014 Gazette 2014/26)**

(54) **PROCEDE DE DIAGNOSTIC D'UN PIEGE A OXYDES D'AZOTE ET MOTEUR ASSOCIE**

VERFAHREN ZUR DIAGNOSE EINER STICKOXIDFALLE UND ZUGEHÖRIGER MOTOR

METHOD FOR DIAGNOSING A NITROGEN OXIDE TRAP AND ASSOCIATED ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2012 FR 1262419**

(43) Date de publication de la demande:
**28.10.2015 Bulletin 2015/44**

(73) Titulaire: **Renault S.A.S.**
**92100 Boulogne-Billancourt (FR)**

(72) Inventeurs:
• **CHANZY, Romain**
**F-75116 Paris (FR)**
• **DI-PENTA, Damiano**
**F-75013 Paris (FR)**
• **SELLAMI, Ali**
**F-75015 Paris (FR)**

(56) Documents cités:
**EP-A1- 2 151 563     WO-A1-2008/029236
FR-A1- 2 939 841**

**Description**

DOMAINE TECHNIQUE DE L'INVENTION

L'invention se situe dans le domaine du post-traitement des émissions polluantes à l'échappement de moteurs à combustion interne fonctionnant habituellement en mélange pauvre, notamment les moteurs diesel équipant des véhicules automobiles.

Elle concerne plus particulièrement un procédé de diagnostic embarqué de pièges à oxydes d'azote ($NO_x$) équipant la ligne d'échappement de tels moteurs. Elle concerne également un dispositif de diagnostic pour la mise en oeuvre d'un tel procédé.

ETAT DE LA TECHNIQUE

Les moteurs modernes fonctionnant habituellement en mélange pauvre, c'est-à-dire avec un rapport de la quantité de carburant sur la quantité d'air inférieur au rapport stœchiométrique, sont souvent équipés d'une ligne d'échappement comportant un piège catalytique à oxydes d'azote ($NO_x$) afin de limiter les rejets dans l'atmosphère de cette espèce chimique nocive à la santé et à l'environnement.

De manière connue, un tel piège fonctionne de manière séquentielle. Pendant le fonctionnement habituel du moteur en mélange pauvre, il stocke les molécules d'oxydes d'azote provenant de la combustion dans le moteur avec une certaine efficacité, c'est-à-dire dans une certaine proportion, le reste des molécules traversant le piège sans y être retenues et étant directement rejetées dans l'atmosphère.

Dans un deuxième temps, par exemple lorsque la masse d'oxydes d'azote stockée dans le piège atteint un certain seuil, un calculateur du moteur déclenche le basculement de ce dernier dans un mode de fonctionnement en mélange riche, c'est-à-dire avec un excès de carburant par rapport à l'air, comparativement aux conditions stcechiométriques. Le piège est alors purgé : les molécules de $NO_x$ stockées dans le piège sont réduites en espèces inoffensives sous l'action de réducteurs (hydrocarbures imbrûlés et monoxyde de carbone) contenus dans les gaz d'échappement du moteur, et évacuées dans l'atmosphère extérieure.

Ces pièges permettent aux véhicules automobiles qui en sont munis de respecter la législation des pays dans lesquels ils circulent. Ces législations fixent des limites maximales aux différentes quantités d'espèces polluantes émises dans les gaz d'échappement. Par exemple, la législation européenne dite « euro6 » impose à tout véhicule particulier équipé d'un moteur diesel et dont le kilométrage est inférieur ou égal à 160.000 kilomètres de ne pas émettre à l'échappement plus de 80 milligrammes de $NO_x$ par kilomètre, ces émissions étant calculées comme la moyenne kilométrique de la quantité totale des émissions de $NO_x$ mesurée sur un cycle complet d'homologation du véhicule, dit cycle NEDC.

On comprend de ce qui précède que le respect d'une telle norme dépend de la quantité de $NO_x$ émise par le moteur pendant le cycle, et de l'efficacité moyenne du piège, c'est-à-dire du pourcentage des molécules de $NO_x$ émises par le moteur que le piège parvient à stocker en moyenne pendant la phase de fonctionnement du moteur en mélange pauvre sur cycle NEDC. Typiquement, pour un moteur diesel émettant avant 160.000 kilomètres le double du seuil autorisé par la norme, la norme est respectée si l'efficacité moyenne du piège à oxydes d'azote est encore supérieure à 50 % avant 160.000 kilomètres.

D'autre part, la norme dite « OBD » (de l'acronyme anglais pour : On-Board Diagnostics) impose aux constructeurs automobiles de surveiller l'efficacité des dispositifs de contrôle des émissions polluantes sur la durée de vie des véhicules automobiles. Ces derniers doivent embarquer un diagnostic qui permette de détecter que le piège à oxydes d'azote dont ils sont équipés est défaillant, et qui avertisse le conducteur du véhicule, par exemple grâce à l'allumage d'un voyant, qu'il faut réparer le véhicule en remplaçant le piège.

Avec la sévérité toujours accrue de la législation, un piège à oxydes d'azote est considéré comme défaillant alors qu'il conserve une efficacité moyenne résiduelle encore importante, par exemple 25 %. En d'autres termes, l'efficacité moyenne à partir de laquelle un piège est déclaré défaillant est inférieure à l'efficacité moyenne d'un piège qui permette tout juste de respecter la législation relative aux polluants, mais elle en est très proche.

Il existe donc un besoin de diagnostiquer avec précision l'efficacité moyenne d'un piège à oxydes d'azote. Plus précisément, il convient qu'un diagnostic embarqué puisse faire la distinction entre un piège en bon état de marche, un piège dit « limite dépollution », c'est-à-dire par exemple un piège dont l'efficacité moyenne est de 50%, et un piège dit « limite OBD », c'est-à-dire par exemple un piège dont l'efficacité moyenne est de 25%. Un tel diagnostic doit être fiable, c'est-à-dire qu'il doit éviter les risques de non-détection (i.e. : le cas d'un piège défaillant jugé non-défaillant) et de fausse détection (i.e. : le cas d'un piège non-défaillant jugé défaillant). La détection d'un piège dont l'efficacité est juste inférieure à celle d'un piège « limite dépollution » nécessitera un simple réglage ou un entretien du moteur pour rendre le véhicule à nouveau conforme, tandis que la détection d'un piège dont l'efficacité devient inférieure à celle d'un piège « limite OBD » impliquera un remplacement complet du piège.

On connaît de l'état de la technique plusieurs procédés de diagnostic qui visent à évaluer l'efficacité d'un piège à oxydes d'azote. Par exemple, la publication FR2916017 divulgue un procédé de diagnostic d'un piège à partir de la quantité de réducteurs utilisés pendant la phase de purge et de la quantité d'oxydes d'azote stockée dans le piège. On connaît aussi de la publication FR2940356 un procédé de diagnostic d'un piège en fonction du débit de réducteurs pendant la phase de purge.

La publication FR2939841 divulgue un procédé de diagnostic basé sur l'efficacité de conversion du piège.

Les procédés de diagnostic connus manquent néanmoins de précision. Plus particulièrement, les procédés qui recourent à des mesures ou à des estimations lors de la phase de purge du piège ne peuvent être mis en oeuvre que de manière ponctuelle, c'est-à-dire uniquement lorsque les conditions de déclenchement de la purge sont réunies, par exemple l'atteinte d'un seuil de masse de $NO_x$ stockée dans le piège. De plus, ils sont dépendants de l'efficacité de la purge, c'est-à-dire du rendement de la réaction de réduction des $NO_x$ par les réducteurs contenus dans les gaz d'échappement, et non pas seulement de l'efficacité de stockage du piège, ce qui peut fausser le résultat.

RESUME DE L'INVENTION

L'invention propose de remédier aux défauts des procédés de diagnostic connus. Elle propose pour cela un procédé de diagnostic d'un piège à oxydes d'azote apte à stocker des oxydes d'azote émis par un moteur à combustion interne de véhicule automobile, caractérisé en ce qu'il comprend au moins des étapes consistant à:

- déterminer l'efficacité instantanée du piège ;
- comparer l'efficacité instantanée dudit piège avec l'efficacité instantanée d'un premier piège de référence ;
- comparer l'efficacité instantanée dudit piège avec l'efficacité instantanée d'un second piège de référence ; et
- établir d'un diagnostic sur l'état du piège à partir :

  - d'un premier critère de diagnostic égal au pourcentage de la durée du diagnostic pendant lequel l'efficacité instantanée du piège est supérieure à l'efficacité instantanée du premier piège de référence ; et
  - d'un deuxième critère de diagnostic égal au pourcentage de la durée du diagnostic pendant lequel l'efficacité instantanée du piège est comprise entre l'efficacité instantanée du second piège de référence et l'efficacité instantanée du premier piège de référence.

L'invention propose aussi un moteur équipé d'un dispositif de diagnostic apte à la mise en oeuvre de ce procédé.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 est une représentation schématique d'un moteur à combustion interne équipé d'un dispositif de diagnostic apte à la mise en oeuvre du procédé selon l'invention ;
- la figure 2 illustre les différentes étapes d'un procédé de diagnostic selon l'invention ;
- la figure 3 est un graphique représentant l'évolution temporelle de l'efficacité instantanée du piège ainsi que l'efficacité d'un piège dit « limite dépollution» et d'un piège dit « limite OBD », selon l'état de différents paramètres de fonctionnement du moteur ; et
- la figure 4 est une représentation schématique illustrant les étapes de comparaison de critères de diagnostic du procédé, avec des seuils de diagnostic.

DESCRIPTION DETAILLEE DES FIGURES

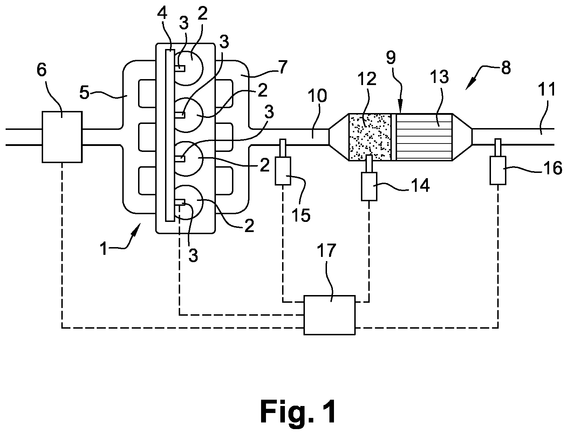

La figure 1 représente schématiquement un moteur à combustion interne 1 fonctionnant en mélange pauvre, par exemple un moteur diesel. Le moteur 1 comporte des cylindres 2 (au nombre de quatre sur la figure), dont chacun est alimenté en carburant par un injecteur 3 à partir d'une rampe à carburant 4, et en air provenant d'un collecteur d'admission 5.

De manière non-limitative, le débit d'air admis $Q_{adm}$ dans le moteur 1 peut être mesuré par un débitmètre 6 situé à l'entrée du collecteur d'admission 5. En variante (non-représentée), il pourrait aussi être estimé en mesurant le débit des gaz d'échappement $Q_{ech}$ grâce à un débitmètre à l'échappement du moteur 1, et en additionnant ce débit de gaz $Q_{ech}$ au débit de carburant $Q_{carb}$ injecté dans les cylindres 2, selon le principe de conservation de la masse.

Les gaz brûlés, issus de la combustion dans les cylindres 2, sont évacués par l'intermédiaire d'un collecteur d'échappement 7 dans une ligne d'échappement 8, qui comprenant un dispositif catalytique 9 de traitement des gaz d'échappement, une descente d'échappement 10 qui relie le collecteur d'échappement 7 au dispositif catalytique 9, et un pot d'échappement 11 par lequel les gaz d'échappement sont évacués dans l'atmosphère extérieure après traitement par le dispositif catalytique 9.

Le dispositif catalytique 9 contient un piège à oxydes d'azote 12. Il peut aussi comporter un dispositif supplémentaire de traitement des gaz d'échappement 13, par exemple un filtre à particules 13 qui permet de traiter les suies émises par la combustion dans le moteur 1. Le piège à oxydes d'azote 12 est équipé d'une sonde de température 14 qui permet de mesurer la température $\theta_{NT}$ du piège 12. Deux capteurs d'oxydes d'azote 15, 16 sont montés respectivement en amont et en aval du dispositif catalytique 9 (dans le sens de l'écoulement des gaz d'échappement). Le capteur d'oxydes d'azote amont 15 peut être implanté sur le tuyau de liaison 10 et le capteur d'oxydes d'azote aval 16 peut être implanté sur le pot d'échappement 11.

De manière connue, le fonctionnement du moteur 1 est piloté par un calculateur 17. Celui-ci est relié à un certain nombre de capteurs et d'actionneurs, comprenant au moins le débitmètre 6, les injecteurs 3, la sonde de température 14 et les deux capteurs de $NO_x$ amont et aval 15,16.

Le calculateur 17 détermine la richesse r du mélange carburant / air en ajustant le débit de carburant $Q_{carb}$ injecté par rapport au débit d'air $Q_{adm}$. Quand la richesse r est inférieure à 1, c'est-à-dire quand le débit d'air $Q_{adm}$ est en excès par rapport au débit de carburant $Q_{carb}$ relativement aux proportions stoechiométriques, le piège 12 stocke une partie des molécules d'oxydes d'azote issues de la combustion dans le moteur 1.

A chaque instant, le capteur amont 15 et le capteur aval 16 permettent de mesurer respectivement la concentration en $NO_x$ à l'entrée $[NO_x]_{in}$ et la concentration en $NO_x$ à la sortie $[NO_x]_{out}$ du dispositif catalytique 9. Ces deux capteurs 15,16 permettent d'estimer l'efficacité instantanée de stockage $\varepsilon$ du piège 12 à oxydes d'azote, ou efficacité instantanée $\varepsilon$, grâce à l'équation suivante :

$$(Eq.1) \quad \varepsilon = (\ [NO_x]_{in} - [NO_x]_{out}\ ) / [NO_x]_{in}$$

En variante, le capteur d'oxydes d'azote amont 15 peut être supprimé. Dans ce cas, la concentration en $NO_x$ à l'entrée $[NO_x]_{in}$ du dispositif catalytique 9 peut être estimée à chaque instant à partir d'une cartographie, en fonction du point de fonctionnement du moteur 1. Un tel point de fonctionnement dépend de différents paramètres comportant au moins le régime de rotation N du moteur 1, une consigne de couple C qui est par exemple obtenue à partir de l'enfoncement de la pédale d'accélérateur du véhicule par le conducteur, et une valeur représentative de la température $\theta_{mot}$ du moteur, par exemple la température d'huile ou la température d'eau. La cartographie de concentration en $NO_x$ en fonction du point de fonctionnement du moteur 1 peut être établie au préalable au banc d'essais, en faisant un balayage de paramètres. Elle est ensuite stockée dans la mémoire d'un calculateur 17 du moteur 1. Lors du fonctionnement du véhicule, la concentration en $NO_x$ à l'entrée $[NO_x]_{in}$ du dispositif catalytique 9 est déterminée grâce à cette cartographie en fonction des paramètres du point de fonctionnement courant du moteur 1.

Le calculateur 17 provoque, par exemple lorsque la masse d'oxydes d'azote stockée dans le piège 12 atteint un seuil donné ou à intervalle de temps régulier, le basculement du fonctionnement du moteur 1 à une richesse r supérieure à 1, c'est-à-dire avec un excès de débit de carburant $Q_{carb}$ par rapport au débit d'air $Q_{air}$. Les molécules de $NO_x$ réagissent dans le piège 12 avec les réducteurs (hydrocarbures imbrûlés) contenus dans les gaz d'échappement et sont réduites en molécules inoffensives. En prolongeant l'opération de purge suffisamment longtemps, on peut s'assurer que le piège 12 est bien complètement purgé de son stock de $NO_x$.

L'efficacité instantanée $\varepsilon$ du piège 12 ne permet pas, par une estimation ponctuelle, de déterminer avec précision si le piège 12 est défaillant, car elle n'est pas constante. Elle dépend à chaque instant t :

- de la température $\theta_{NT}$ du piège 12 ;
- du débit de gaz d'échappement $Q_{ech}$ traversant le piège 12 ;
- de la concentration en oxydes d'azote $[NO_x]_{in}$ à l'entrée du dispositif catalytique 9 ;
- de la richesse r ; et
- de la masse d'oxydes d'azote $M_{NOx}$ déjà stockée dans le piège 12 à cet instant t.

L'invention propose de diagnostiquer la défaillance du piège 12 en comparant, pendant une durée T suffisamment longue, l'efficacité instantanée $\varepsilon$ de celui-ci,

- d'une part, à l'efficacité instantanée $\varepsilon_{poll}$ d'un premier piège de référence 18, dit piège « limite dépollution » 18 (non représenté sur la figure 1) ; et
- d'autre part, à l'efficacité instantanée $\varepsilon_{OBD}$ d'un second piège de référence 19, dit piège « limite OBD » 19 (non représenté sur la figure 1),

puis en établissant le diagnostic au moins à partir du pourcentage de la durée du diagnostic T pendant lequel l'efficacité instantanée ε du piège 12 est supérieure à l'efficacité instantanée $ε_{poll}$ du premier piège de référence 18.

Par piège « limite dépollution » 18, on entend un piège dont l'efficacité moyenne de stockage des $NO_x$ sur le cycle imposé par la législation est telle qu'elle permette au véhicule de rejeter une quantité de $NO_x$ juste égale au seuil légal. Par exemple, pour la norme européenne dite « euro6 », le seuil est de 80 milligrammes de $NO_x$ par kilomètre sur la totalité du cycle dit NEDC. Pour un moteur 1 dont la combustion rejette deux fois plus de $NO_x$ que le seuil, le premier piège de référence 18 a une efficacité moyenne de 50%.

Par piège « limite OBD » 19, on entend un piège dont l'efficacité moyenne, sur le même cycle imposé par la législation, est telle que toute pièce d'efficacité moindre doit être déclarée défaillante par la norme OBD (acronyme anglais pour : On-Board Diagnostics). L'efficacité moyenne d'un tel second piège de référence 19, par exemple 25%, est inférieure à l'efficacité moyenne du premier piège de référence 18, mais elle en est proche. En d'autres termes, la norme OBD considère comme défaillant un piège qui présente une efficacité résiduelle encore relativement élevée et non pas seulement un piège dont l'efficacité est devenue nulle. Un piège 12 défaillant, c'est-à-dire moins efficace que le second piège de référence 19 doit être signalé au conducteur du véhicule, par exemple par l'allumage d'un voyant au tableau de bord, en vue de son remplacement.

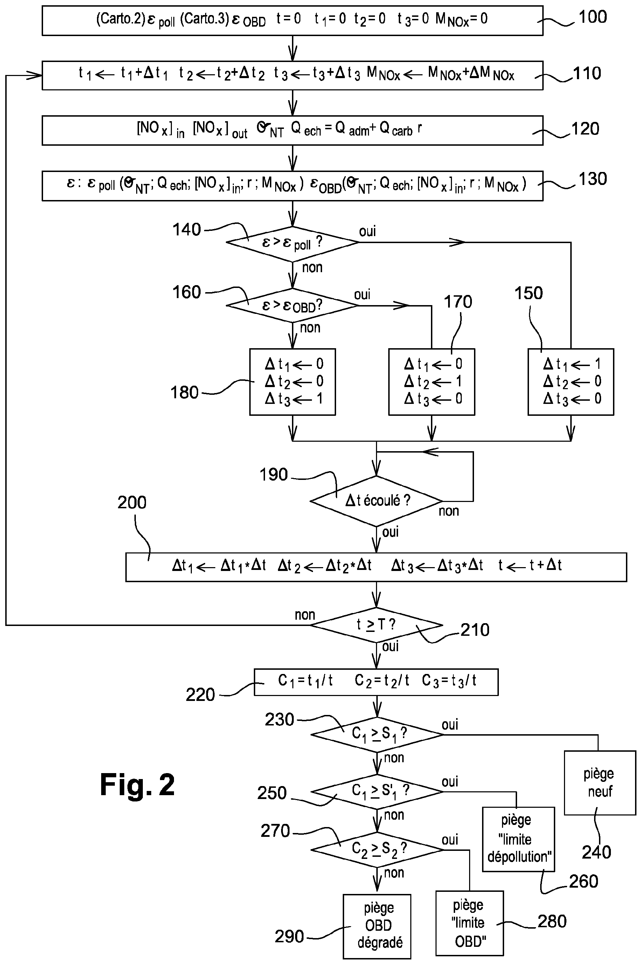

La figure 2 illustre une méthode de comparaison de l'efficacité instantanée ε d'un piège 12 avec l'efficacité instantanée $ε_{poll}$ du premier piège de référence 18 et avec l'efficacité instantanée $ε_{OBD}$ du second piège de référence 19, servant au procédé de diagnostic selon l'invention.

En référence à la figure 2, le procédé comporte une étape d'initialisation 100, dans laquelle on stocke dans une mémoire du calculateur 17 les cartographies d'efficacité $ε_{poll}$, $ε_{OBD}$ de chacun des deux pièges de référence 18,19 en fonction de sa température $θ_{NT}$, du débit de gaz d'échappement $Q_{ech}$ le traversant, de la concentration en oxydes d'azote $[NO_x]_{in}$ entrante, de la richesse r, et de la masse d'oxydes d'azote $M_{NOx}$ contenue. Par exemple, les pièges de référence 18,19 peuvent être fabriqués artificiellement par un vieillissement artificiel d'un piège 12 neuf au four à haute température. Typiquement, le premier piège de référence 18, ou piège « limite dépollution » 18, est maintenu pendant 5 heures au four à une température d'environ 900°C, et le second piège de référence 19, ou piège « limite OBD », est maintenu pendant 5 heures au four à une température d'environ 1200°C. Les cartographies suivantes :

$$\text{(Carto.2)} \qquad ε_{poll} = ε_{poll} (θ_{NT} ; Q_{ech} ; [NO_x]_{in} ; r ; M_{NOx})$$

et

$$\text{(Carto .3)} \qquad ε_{OBD} = ε_{OBD} (θ_{NT} ; Q_{ech} ; [NO_x]_{in} ; r ; M_{NOx})$$

peuvent être obtenues par balayage de paramètres au banc d'essais, avant d'être stockées une fois pour toutes dans le calculateur 17.

En outre, à cette étape d'initialisation 100, on initialise à 0 dans différents compteurs du calculateur 17 :

- un compteur de durée du diagnostic t ;
- un premier compteur d'une première durée $t_1$, correspondant à la durée pendant laquelle l'efficacité instantanée ε du piège 12 est supérieure à l'efficacité instantanée $ε_{poll}$ du premier piège de référence 18 ;
- un deuxième compteur d'une deuxième durée $t_2$, correspondant à la durée pendant laquelle l'efficacité instantanée ε du piège 12 est inférieure à l'efficacité instantanée $ε_{poll}$ du premier piège de référence 18, tout en étant supérieure à l'efficacité instantanée $ε_{OBD}$ du second piège de référence 19 ;
- un troisième compteur d'une troisième durée $t_3$, correspondant à la durée pendant laquelle l'efficacité instantanée ε du piège 12 est inférieure à l'efficacité instantanée $ε_{OBD}$ du second piège de référence 19.
- un compteur de masse d'oxydes d'azote $M_{NOx}$ stockée dans le piège 12.

Avantageusement, la masse d'oxydes d'azote est initialisée à 0 de manière certaine lorsque le procédé de diagnostic démarre immédiatement après une phase de purge suffisamment longue pour réduire la totalité du stock d'oxydes d'azote.

En variante (non-représentée à l'étape 100 sur la figure 2), il est également possible d'initialiser la valeur de la masse d'oxydes d'azote $M_{NOx}$ contenue dans le piège 12 à une valeur non-nulle prédéterminée. Par exemple, cette masse $M_{NOx}$ est calculée comme étant l'intégrale temporelle, entre la fin de la dernière phase de purge et le moment de l'initialisation, de la différence entre le débit massique d'oxydes d'azote $[Q_{NOx}]_{in}$ à l'entrée du dispositif catalytique 9 et le débit massique d'oxydes d'azote $[Q_{NOx}]_{out}$ à la sortie du dispositif catalytique 9.

Le débit massique d'oxydes d'azote entrant $[Q_{NOx}]_{in}$ dans le piège 12 peut être calculé comme le produit du débit des gaz d'échappement $Q_{ech}$ et de la concentration d'oxydes d'azote $[Q_{NOx}]_{in}$ à l'entrée du dispositif catalytique 9, mesurée par la sonde amont 15. Le débit massique d'oxydes d'azote sortant $[Q_{NOx}]_{out}$ du piège 12 peut être calculé comme le produit du débit des gaz d'échappement $Q_{ech}$ et de la concentration d'oxydes d'azote $[Q_{Nox}]_{out}$ à la sortie du dispositif catalytique 9, mesurée par la sonde aval 16.

Le procédé comprend une étape 110 dans laquelle on incrémente le compteur de durée du diagnostic t, les compteurs des première, deuxième et troisième durées $t_1$, $t_2$, $t_3$, et le compteur de masse $M_{NOx}$ respectivement par un pas de temps de diagnostic $\Delta t$, des écarts de première, deuxième et troisième durées $\Delta t_1, \Delta t_2, \Delta t_3$, et un écart de masse $\Delta M_{NOx}$ déterminés à des étapes ultérieures du procédé comme il est décrit dans la suite.

Le procédé comprend une étape 120 de détermination de la concentration d'oxydes d'azote $[Q_{NOx}]_{in}$ à l'entrée du dispositif catalytique 9, de la concentration d'oxydes d'azote $[Q_{NOx}]_{out}$ à la sortie du dispositif catalytique 9, de la température $\theta_{NT}$ du piège 12, du débit des gaz d'échappement $Q_{ech}$ et de la richesse r.

Le procédé comprend une étape 130 de calcul :

- de l'efficacité instantanée $\varepsilon$ du piège à oxydes d'azote 12 grâce à l'équation suivante :

$$\text{(Eq.1)} \quad \varepsilon = ( [NO_x]_{in} - [NO_x]_{out} ) / [NO_x]_{in} ;$$

et

- de l'efficacité instantanée des deux pièges de référence 18,19 grâce à leurs cartographies respectives suivantes :

$$\text{(Carto.2)} \quad \varepsilon_{poll} = \varepsilon_{poll} (\theta_{NT} ; Q_{ech} ; [NO_x]_{in} ; r ; M_{NOx})$$

et

$$\text{(Carto .3)} \quad \varepsilon_{OBD} = \varepsilon_{OBD} (\theta_{NT} ; Q_{ech} ; [NO_x]_{in} ; r ; M_{NOx})$$

Le procédé comprend une première étape de test 140 de test où l'on détermine si l'efficacité instantanée $\varepsilon$ du piège à oxydes d'azote 12 est supérieure à l'efficacité instantanée $\varepsilon_{poll}$ du premier piège de référence 18.

Si ce premier test est positif, le procédé oriente vers une étape 150 de prédétermination des écarts de première, deuxième et troisième durées $\Delta t_1, \Delta t_2, \Delta t_3$. A cette étape 150, l'écart de première durée $\Delta t_1$ prend la valeur 1 et les deux autres la valeur 0. Si le test est négatif, le procédé oriente vers une deuxième étape de test 160 où l'on détermine si l'efficacité instantanée $\varepsilon$ du piège 12 est supérieure à l'efficacité instantanée $\varepsilon_{OBD}$ du second piège de référence 19.

Si ce deuxième test est positif, le procédé oriente vers une étape 170 de prédétermination des écarts de première, deuxième et troisième durées $\Delta t_1, \Delta t_2, \Delta t_3$. A cette étape 170, l'écart de première durée $\Delta t_2$ prend la valeur 1 et les deux autres la valeur 0. Si le test est négatif, le procédé oriente vers une étape 180 de prédétermination des écarts de première, deuxième et troisième durées $\Delta t_1, \Delta t_2, \Delta t_3$. A cette étape 180, l'écart de première durée $\Delta t_3$ prend la valeur 1 et les deux autres la valeur 0.

A une étape 190 du procédé, on attend l'écoulement du pas de temps $\Delta t$, avant de procéder, dans une étape 200, à la mise à jour de la durée t du procédé de diagnostic, des écarts de première, deuxième et troisième durées $\Delta t_1, \Delta t_2, \Delta t_3$, et de l'écart de masse d'oxydes d'azote $\Delta M_{NOx}$. On ajoute à la durée t du procédé de diagnostic la valeur du pas de temps $\Delta t$. Les écarts de première, seconde et troisième durées $\Delta t_1, \Delta t_2, \Delta t_3$, dont les valeurs 0 ou 1 sont issues des étapes 150, 170 ou 180, sont multipliées par la valeur du pas de temps $\Delta t$. L'écart de masse d'oxydes d'azote est calculé par l'équation suivante :

$$\text{(Eq.4)} \quad \Delta M_{NOx} = Q_{ech} * ( [NO_x]_{in} - [NO_x]_{out} ) * \Delta t$$

Le procédé comporte ensuite une troisième étape de test 210 dans laquelle on compare la durée t du procédé de diagnostic à une durée prédéterminée T. Tant que la durée t du procédé de diagnostic n'a pas atteint la durée prédéterminée T, le procédé reprend à l'étape 110, dans laquelle on incrémente les premier, deuxième et troisième compteurs de durée et le compteur de masse. Plus précisément :

- on ajoute l'écart de première durée $\Delta t_1$ à la première durée $t_1$ ;

- on ajoute l'écart de deuxième durée $\Delta t_2$ à la première durée $t_2$ ;
- on ajoute l'écart de troisième durée $\Delta t_3$ à la troisième durée $t_3$ ; et
- on ajoute l'écart de masse d'oxydes d'azote $\Delta M_{NOx}$ à la masse d'oxydes d'azote $M_{NOx}$.

Lorsque la durée t du procédé de diagnostic atteint ou dépasse la durée prédéterminée T, le procédé cesse d'incrémenter les différents compteurs de durée et de masse, et se poursuit par une étape 220 de détermination des critères de diagnostic.

A cette étape 220, on calcule :

- un premier critère de diagnostic $C_1$ comme égal au pourcentage de la durée du diagnostic pendant lequel l'efficacité instantanée ε a été supérieure à l'efficacité instantanée $\varepsilon_{poll}$ du premier piège de référence 18, selon la formule : $C_1 = t_1/t$ ;
- un deuxième critère de diagnostic $C_2$ comme égal au pourcentage de la durée du diagnostic pendant lequel l'efficacité instantanée ε a été inférieure à l'efficacité instantanée $\varepsilon_{poll}$ du premier piège de référence 18 tout en étant supérieure à l'efficacité instantanée $\varepsilon_{OBD}$ du second piège de référence 19, selon la formule : $C_2 = t_2/t$ ;
- un troisième compteur d'une troisième durée $t_3$, correspondant à la durée pendant laquelle l'efficacité instantanée ε du piège 12 est inférieure à l'efficacité instantanée $\varepsilon_{OBD}$ du second piège de référence 19, selon la formule $C_3 = t_3/t$.

Dans les trois formules précédentes, t désigne la dernière valeur de la durée du diagnostic avant le passage à l'étape 220. Elle est égale à la durée prédéterminée T ou en diffère au plus de la durée d'un pas de temps $\Delta t$.

Le procédé comporte ensuite une étape 230 de comparaison du premier critère de diagnostic $C_1$ avec un premier seuil $S_1$. De préférence, le premier seuil $S_1$ est sensiblement égal à 0,7. Si le premier critère de diagnostic $C_1$ est supérieur au premier seuil $S_1$, le procédé de diagnostic détermine à l'étape 240 que le piège 12 est à l'état neuf, ce qui n'est suivi d'aucune remontée d'information vers le conducteur mais peut être utile à un professionnel après un changement de piège 12 sur le véhicule du conducteur, de manière à vérifier que le piège 12 de rechange est bien à l'état neuf et conforme à la production.

Si le premier critère de diagnostic $C_1$ est inférieur au premier seuil $S_1$, le procédé oriente vers une étape de comparaison 250 du premier critère de diagnostic $C_1$ avec un deuxième seuil $S'_1$ inférieur au premier seuil $S_1$. De préférence, le deuxième seuil $S'_1$ est sensiblement égal à 0,12. Si le premier critère de diagnostic $C_1$ est supérieur au deuxième seuil $S'_1$, le procédé de diagnostic détermine à l'étape 260 que le piège 12 est au moins équivalent à un piège « limite dépollution » 18, c'est-à-dire que les émissions du véhicule sont conformes à la législation. Cette étape n'est suivie d'aucune remontée d'information vers le conducteur.

Si le premier critère de diagnostic $C_1$ est inférieur au deuxième seuil $S'_1$, le procédé oriente vers une étape de comparaison 270 du deuxième critère de diagnostic $C_2$ avec un troisième seuil $S_2$. De préférence, le troisième seuil $S_2$ est supérieur à 0,5. Si le deuxième critère de diagnostic $C_2$ est supérieur au troisième seuil $S_2$, le procédé de diagnostic détermine à l'étape 280 que le piège 12 est au moins équivalent à un piège « limite OBD » 19, c'est-à-dire que les émissions du véhicule ne sont plus conformes à la législation, mais que l'efficacité résiduelle du piège 12 ne nécessite pas encore son remplacement. Une information est transmise au conducteur, par exemple l'allumage d'un premier voyant au tableau de bord du véhicule, pour qu'il puisse effectuer une opération de vérification et de maintenance du véhicule.

Si le deuxième critère de diagnostic $C_2$ est inférieur au troisième seuil $S_2$, le procédé de diagnostic détermine à l'étape 290 que le piège 12 n'est plus conforme à la norme « OBD », c'est-à-dire qu'il est dégradé. Son efficacité résiduelle n'est plus suffisante pour envisager une simple opération de maintenance du véhicule. Une information est transmise au conducteur, par exemple l'allumage d'un deuxième voyant au tableau de bord, pour qu'il puisse faire remplacer le piège 12 devenu défectueux.

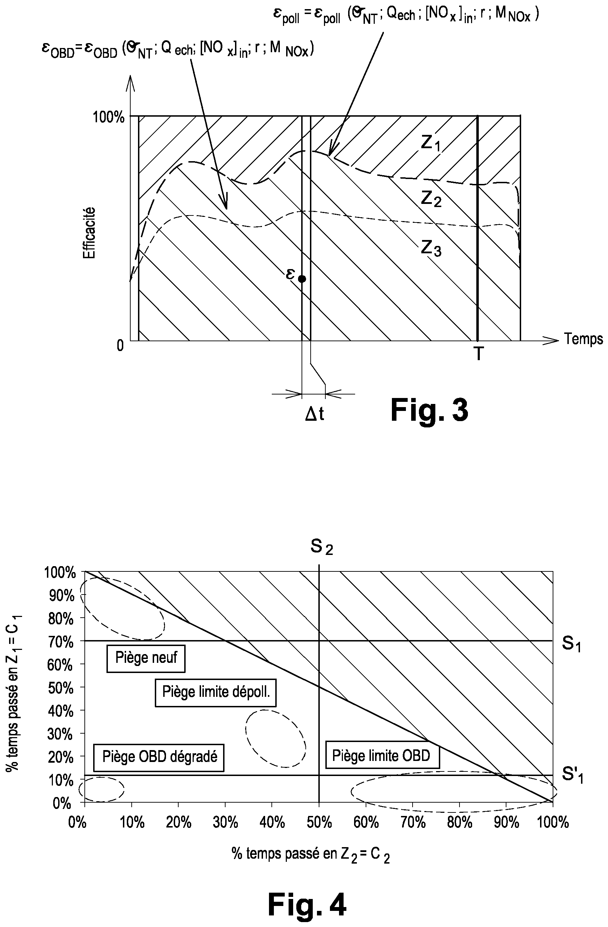

Sur la figure 3, dans laquelle l'axe des abscisses représente le temps et l'axe des ordonnées l'efficacité, on a représenté l'évolution temporelle de l'efficacité instantanée $\varepsilon_{poll}$ du premier piège de référence 18 ou piège « limite dépollution » 18, et de l'efficacité $\varepsilon_{OBD}$ du deuxième piège de référence 19 ou piège « limite OBD » 19.

Ces valeurs d'efficacité instantanées varient en fonction du profil de roulage du véhicule et des points de fonctionnement du moteur 1, selon les différentes valeurs successives que prennent la température $\theta_{NT}$ du piège 12, le débit $Q_{ech}$, la concentration en oxydes d'azote $[NO_x]_{in}$ à l'entrée du dispositif catalytique 9, la richesse r et la masse d'oxydes d'azote $M_{NOx}$ déjà stockée dans le piège 12.

A chaque valeur de durée t n'ayant pas encore dépassé la durée prédéterminée T, on détermine avec un pas de temps $\Delta t$ la valeur d'efficacité ε du piège 12 grâce à l'équation 1, conformément à l'étape 130 du procédé. Cette valeur est comparée aux valeurs d'efficacité $\varepsilon_{poll}, \varepsilon_{OBD}$ des deux pièges de référence 18, 19 (étapes 140 et 160 du procédé).

Les deux courbes d'évolution de l'efficacité $\varepsilon_{poll}, \varepsilon_{OBD}$ des deux pièges de référence 18, 19 délimitent sur la figure 3 trois zones $Z_1, Z_2, Z_3$ d'efficacité ε du piège 12. La lettre $Z_1$ désigne la zone dans laquelle l'efficacité ε du piège 12 est supérieure à celle du piège « limite dépollution » 18. La lettre $Z_2$ désigne la zone dans laquelle est elle comprise entre l'efficacité du piège « limite OBD » 19 et celle du piège « limite dépollution » 18. La lettre $Z_3$ désigne la zone dans laquelle elle est inférieure à l'efficacité du piège « limite OBD » 19. On a représenté sur la figure 3 à titre d'exemple un instant t du diagnostic où l'efficacité $\varepsilon$ du piège 12 se trouve dans la zone $Z_3$.

Les trois critères de diagnostic $C_1,C_2,C_3$ correspondent au pourcentage de la durée totale du diagnostic que l'efficacité $\varepsilon$ du piège 12 passe dans les trois zones $Z_1,Z_2,Z_3$.

La figure 4 est une représentation schématique illustrant les étapes de comparaison des deux premiers critères de diagnostic $C_1,C_2$ du procédé avec les seuils $S_1,S'_1,S_2$, réalisées aux étapes 230 à 290 du procédé (figure 2). L'axe des abscisses représente le deuxième critère de diagnostic $C_2$ et l'axe des ordonnées représente le premier critère de diagnostic $C_1$.

Sur la figure 4, on a pris pour valeurs : $S_1 = 0,7$ (c'est-à-dire : 70% de la durée de diagnostic passé dans la première zone $Z_1$ $S'_1 = 0,12$ (c'est-à-dire : 12% de la durée de diagnostic passé dans la première zone $Z_1$, et $S_2 = 0,5$ (c'est-à-dire : 50% de la durée de diagnostic passé dans la deuxième zone $Z_2$).

Un piège 12 est déclaré neuf (étape 240 du procédé sur la figure 2) quand la condition $C_1 \geq S_1$ est remplie. Un piège 12 est déclaré « limite dépollution » (étape 260 du procédé) quand la condition $S'_1 \leq C_1 < S_1$ est remplie. Sur la figure 4, on a représenté dans un ovale une zone de points représentant les valeurs de premier et de deuxième critère de diagnostic C1,C2 d'un échantillon de plusieurs premiers pièges de référence 18 fabriqués artificiellement.

Un piège 12 est déclaré « limite OBD » (étape 280 du procédé) lorsque, son premier critère de diagnostic $C_1$ remplissant déjà la condition $C_1 < S'_1$, son deuxième critère de diagnostic remplit en outre la condition $C_2 \geq S_2$ Sur la figure 4, on a représenté dans un ovale une zone de points représentant les valeurs de premier et de deuxième critère de diagnostic C1,C2 d'un échantillon de plusieurs seconds pièges de référence 19 fabriqués artificiellement. Enfin, un piège 12 est déclaré dégradé (étape 290 du procédé) lorsque, son premier critère de diagnostic $C_1$ remplissant déjà la condition $C_1 < S'_1$, son deuxième critère de diagnostic remplit en outre la condition $C_2 < S_2$.

## Revendications

1. Procédé de diagnostic d'un piège à oxydes d'azote (12) apte à stocker des oxydes d'azote émis par un moteur (1) à combustion interne de véhicule automobile, **caractérisé en ce qu'**il comprend au moins des étapes consistant à :

   - déterminer l'efficacité instantanée ($\varepsilon$) du piège (12) ;
   - comparer l'efficacité instantanée ($\varepsilon$) du piège (12) avec l'efficacité instantanée ($\varepsilon_{poll}$) d'un premier piège de référence (18) ;
   - comparer l'efficacité instantanée ($\varepsilon$) du piège (12) avec l'efficacité instantanée ($\varepsilon_{OBD}$) d'un second piège de référence (19) ; et
   - établir d'un diagnostic sur l'état du piège (12) à partir :

     - d'un premier critère de diagnostic ($C_1$) égal au pourcentage de la durée (t) du diagnostic pendant lequel l'efficacité instantanée ($\varepsilon$) du piège (12) est supérieure à l'efficacité instantanée ($\varepsilon_{poll}$) du premier piège de référence (18) ; et
     - d'un deuxième critère de diagnostic ($C_2$) égal au pourcentage de la durée (t) du diagnostic pendant lequel l'efficacité instantanée ($\varepsilon$) du piège (12) est comprise entre l'efficacité instantanée ($\varepsilon_{OBD}$) du second piège de référence (19) et l'efficacité instantanée ($\varepsilon_{poll}$) du premier piège de référence (18).

2. Procédé selon la revendication 1, dans lequel l'efficacité instantanée ($\varepsilon$) du piège (12), l'efficacité instantanée ($\varepsilon_{poll}$) du premier piège de référence (18) et l'efficacité instantanée ($\varepsilon_{OBD}$) du second piège de référence (19) sont déterminées pendant une phase de fonctionnement du moteur (1) en mélange pauvre.

3. Procédé selon la revendication 1 ou 2, dans lequel l'étape d'établissement du diagnostic comprend des étapes consistant à :

   - comparer le premier critère de diagnostic ($C_1$) à un premier seuil ($S_1$) et à un deuxième seuil ($S'_1$) de diagnostic prédéterminés ; et
   - comparer le deuxième critère de diagnostic (C2) à un troisième seuil de diagnostic ($S_2$) prédéterminé.

4. Procédé selon la revendication 1, 2 ou 3, dans lequel l'efficacité instantanée ($\varepsilon$) du piège (12) est calculée à partir des valeurs de concentration en oxydes d'azote $[NO_x]_{in},[NO_x]_{out}$ à l'entrée et à la sortie d'un dispositif catalytique (9) contenant le piège (12).

**5.** Procédé selon la revendication 4, **caractérisé en ce que** la concentration en oxydes d'azote $[NO_x]_{out}$ à l'entrée du dispositif catalytique (9) est mesurée par un capteur d'oxydes d'azote (16).

**6.** Procédé selon la revendication 4 ou 5, **caractérisé en ce que** la concentration en oxydes d'azote $[NO_x]_{in}$ à la sortie du dispositif catalytique (9) est mesurée par un capteur d'oxydes d'azote (15) ou déterminée à partir d'une cartographie en fonction d'un ensemble de paramètres comprenant au moins le régime (N) du moteur (1), le couple (C) du moteur (1) et une valeur représentative de la température $(\theta_{mot})$ du moteur (1).

**7.** Procédé selon l'une quelconque des revendications 4 à 6, **caractérisé en ce que** les valeurs d'efficacité instantanée $(\varepsilon_{poll}, \varepsilon_{OBD})$ des deux pièges de référence (18,19) sont déterminées à partir de cartographies en fonction d'un ensemble de paramètres comprenant au moins la température $(\theta_{NT})$ du piège, le débit de gaz d'échappement $(Q_{ech})$ du moteur traversant le piège, la concentration en oxydes d'azote $[NO_x]_{in}$ à l'entrée du dispositif catalytique (9), la richesse (r) du mélange carburant/air du moteur (1) et la masse d'oxydes d'azote $(M_{NOx})$ contenue dans le piège.

**8.** Procédé selon l'une quelconque des revendications 3 à 7, **caractérisé en ce que** le premier seuil de diagnostic $(S_1)$ est sensiblement égal à 0,7.

**9.** Procédé selon l'une quelconque des revendications 3 à 8, **caractérisé en ce que** le deuxième seuil de diagnostic $(S'_1)$ est sensiblement égal à 0,12.

**10.** Procédé selon l'une quelconque des revendications 3 à 9, **caractérisé en ce que** le troisième seuil de diagnostic $(S_2)$ est supérieur à 0,5.

**11.** Moteur (1) à combustion interne de véhicule automobile, associé à :

- un piège à oxydes d'azote (12), contenu dans un dispositif catalytique (9), et stockant les oxydes d'azote ;
- des moyens de détermination (15) de la concentration en oxydes d'azote $[NO_x]_{in}$ à l'entrée du dispositif catalytique (9) ; et
- un capteur d'oxydes d'azote (16) positionné en aval du dispositif catalytique (9), apte à mesurer la concentration en oxydes d'azote $[NO_x]_{out}$ à la sortie du dispositif catalytique (9) ; et
- des moyens pour établir un diagnostic sur l'état du piège (12), **caractérisé en ce que** les moyens d'établissement du diagnostic sont agencés pour:
- déterminer une valeur d'efficacité instantanée $(\varepsilon)$ du piège (12) ;
- comparer l'efficacité instantanée $(\varepsilon)$ du piège (12) avec l'efficacité instantanée $(\varepsilon_{poll})$ d'un premier piège de référence (18) ;
- comparer l'efficacité instantanée $(\varepsilon)$ du piège (12) avec l'efficacité instantanée $(\varepsilon_{OBD})$ d'un second piège de référence (19) ; et
- établir le diagnostic sur l'état du piège (12) à partir :

- ■ d'un premier critère de diagnostic $(C_1)$ égal au pourcentage de la durée (t) du diagnostic pendant lequel l'efficacité instantanée $(\varepsilon)$ du piège (12) est supérieure à l'efficacité instantanée $(\varepsilon_{poll})$ du premier piège de référence (18) ; et
- ■ d'un deuxième critère de diagnostic $(C_2)$ égal au pourcentage de la durée (t) du diagnostic pendant lequel l'efficacité instantanée $(\varepsilon)$ du piège (12) est comprise entre l'efficacité instantanée $(\varepsilon_{OBD})$ du second piège de référence (19) et l'efficacité instantanée $(\varepsilon_{poll})$ du premier piège de référence (18).

**12.** Moteur selon la revendication 11, **caractérisé en ce que** les moyens d'établissement du diagnostic sont agencés pour déterminer l'efficacité instantanée $(\varepsilon)$ du piège (12), l'efficacité instantanée $(\varepsilon_{poll})$ du premier piège de référence (18) et l'efficacité instantanée $(\varepsilon_{OBD})$ du second piège de référence (19) pendant une phase de fonctionnement du moteur (1) en mélange pauvre.

**13.** Moteur selon la revendication 11 ou 12, **caractérisé en ce que** les moyens d'établissement du diagnostic sont agencés pour :

- comparer le premier critère de diagnostic $(C_1)$ à un premier seuil $(S_1)$ et à un deuxième seuil $(S'_1)$ de diagnostic prédéterminés ; et
- comparer le deuxième critère de diagnostic (C2) à un troisième seuil de diagnostic $(S_2)$ prédéterminé.

**14.** Moteur selon la revendication 11, 12 ou 13, **caractérisé en ce que** les moyens d'établissement du diagnostic sont agencés pour calculer l'efficacité instantanée ($\varepsilon$) du piège (12) en fonction des valeurs de concentration en oxydes d'azote [NO$_x$]in,[NO$_x$]$_{out}$ à l'entrée et à la sortie d'un dispositif catalytique (9).

**15.** Moteur selon l'une quelconque des revendications 11 à 14, **caractérisé en ce que** les moyens d'établissement du diagnostic sont agencés pour déterminer les valeurs d'efficacité instantanée ($\varepsilon_{poll}$,$\varepsilon_{OBD}$) des deux pièges de référence (18,19) à partir de cartographies en fonction d'un ensemble de paramètres comprenant au moins la température ($\theta_{NT}$) du piège, le débit de gaz d'échappement (Q$_{ech}$) du moteur traversant le piège, la concentration en oxydes d'azote [NO$_x$]$_{in}$ à l'entrée du dispositif catalytique (9), la richesse (r) du mélange carburant/air du moteur (1) et la masse d'oxydes d'azote (M$_{NOx}$) contenue dans le piège.

**16.** Moteur selon la revendication 15, **caractérisé en ce qu'**il est associé à un capteur de température (14) du piège (12).

**Patentansprüche**

**1.** Verfahren zur Diagnose einer Stickoxidfalle (12), welche geeignet ist, von einem Verbrennungsmotor (1) eines Kraftfahrzeugs ausgestoßene Stickoxide zu lagern, **dadurch gekennzeichnet, dass** das Verfahren die folgenden Schritte aufweist:

- Bestimmen des augenblicklichen Wirkungsgrades ($\varepsilon$) der Falle (12);
- Vergleichen des augenblicklichen Wirkungsgrades ($\varepsilon$) der Falle (12) mit dem augenblicklichen Wirkungsgrad ($\varepsilon_{poll}$) einer ersten Referenzfalle (18);
- Vergleichen des augenblicklichen Wirkungsgrades ($\varepsilon$) der Falle (12) mit dem augenblicklichen Wirkungsgrad ($\varepsilon_{OBD}$) einer zweiten Referenzfalle (19); und
- Erstellen einer Diagnose über den Zustand der Falle (12), ausgehend von:

- einem ersten Diagnosekriterium (C$_1$), welches gleich dem Prozentsatz der Dauer (t) der Diagnose ist, während der der augenblickliche Wirkungsgrad ($\varepsilon$) der Falle (12) größer als der augenblickliche Wirkungsgrad ($\varepsilon_{poll}$) der ersten Referenzfalle (18) ist; und
- einem zweiten Diagnosekriterium (C$_2$), welches gleich dem Prozentsatz der Dauer (t) der Diagnose ist, während der der augenblickliche Wirkungsgrad ($\varepsilon$) der Falle (12) zwischen dem augenblicklichen Wirkungsgrad ($\varepsilon_{OBD}$) der zweiten Referenzfalle (19) und dem augenblicklichen Wirkungsgrad ($\varepsilon_{poll}$) der ersten Referenzfalle (18) liegt.

**2.** Verfahren nach Anspruch 1, bei welchem der augenblickliche Wirkungsgrad ($\varepsilon$) der Falle (12), der augenblickliche Wirkungsgrad ($\varepsilon_{poll}$) der ersten Referenzfalle (18) und der augenblickliche Wirkungsgrad ($\varepsilon_{OBD}$) der zweiten Referenzfalle (19) während einer Betriebsphase des Motors (1) bei magerem Gemisch bestimmt werden.

**3.** Verfahren nach Anspruch 1 oder 2, bei welchem der Schritt des Erstellens der Diagnose die folgenden Schritte aufweist:

- Vergleichen des ersten Diagnosekriteriums (C$_1$) mit einem ersten, vorgegebenen Diagnoseschwellenwert (S$_1$) und einem zweiten, vorgegebenen Diagnoseschwellenwert (S'$_1$) ; und
- Vergleichen des zweiten Diagnosekriteriums (C$_2$) mit einem dritten, vorgegebenen Diagnoseschwellenwert (S$_2$).

**4.** Verfahren nach Anspruch 1, 2 oder 3, bei welchem der augenblickliche Wirkungsgrad ($\varepsilon$) der Falle (12) ausgehend von Konzentrationswerten von Stickoxiden [NO$_x$]$_{in}$, [NO$_x$]$_{out}$ am Eingang und am Ausgang einer die Falle (12) enthaltenden katalytischen Vorrichtung (9) berechnet werden.

**5.** Verfahren nach Anspruch 4, **dadurch gekennzeichnet, dass** die Konzentration an Stickoxiden [NO$_x$]$_{out}$ am Eingang der katalytischen Vorrichtung (9) durch einen Stickoxid-Sensor (16) gemessen wird.

**6.** Verfahren nach Anspruch 4 oder 5, **dadurch gekennzeichnet, dass** die Konzentration an Stickoxiden [NO$_x$]$_{in}$ am Ausgang der katalytischen Vorrichtung (9) durch einen Stickoxid-Sensor (15) gemessen wird oder ausgehend von einer Kartographie in Abhängigkeit eines Parametersatzes bestimmt wird, welcher mindestens die Drehzahl (N) des Motors (1), das Drehmoment (C) des Motors (1) und einen der Temperatur des Motors (1) entsprechenden

Wert ($\theta_{mot}$) aufweist.

7. Verfahren nach einem der Ansprüche 4 bis 6, **dadurch gekennzeichnet, dass** die Werte des augenblicklichen Wirkungsgrades ($\varepsilon_{poll}$, $\varepsilon_{OBD}$) der beiden Referenzfallen (18, 19) ausgehend von Kartographien in Abhängigkeit eines Parametersatzes bestimmt werden, welcher mindestens die Temperatur ($\theta_{NT}$) der Falle, den Durchsatz an Auspuffgas ($Q_{ech}$) des Motors, welches die Falle durchquert, die Konzentration an Stickoxiden $[NO_x]_{in}$ am Eingang der katalytischen Vorrichtung (9), die Anreicherung (r) des Kraftstoff/Luft-Gemisches des Motors (1) und die Masse der in der Falle enthaltenen Stickoxide ($M_{NO_x}$) aufweist.

8. Verfahren nach einem der Ansprüche 3 bis 7, **dadurch gekennzeichnet, dass** der erste Diagnoseschwellenwert ($S_1$) im Wesentlichen gleich 0,7 ist.

9. Verfahren nach einem der Ansprüche 3 bis 8, **dadurch gekennzeichnet, dass** der zweite Diagnoseschwellenwert ($S'_1$) im Wesentlichen gleich 0,12 ist.

10. Verfahren nach einem der Ansprüche 3 bis 9, **dadurch gekennzeichnet, dass** der dritte Diagnoseschwellenwert ($S_2$) im Wesentlichen gleich 0,5 ist.

11. Verbrennungsmotor (1) eines Kraftfahrzeugs, welcher mit Folgendem verknüpft ist:

    - einer Stickoxidfalle (12), welche in einer katalytischen Vorrichtung (9) enthalten ist und die Stickoxide speichert;
    - Mitteln zur Bestimmung (15) der Konzentration an Stickoxiden $[NO_x]_{in}$ am Eingang der katalytischen Vorrichtung (9);
    - und einem Stickoxid-Sensor (16), welcher stromabwärts von der katalytischen Vorrichtung (9) angeordnet und geeignet ist, die Konzentration von Stickoxiden $[NO_x]_{out}$ am Ausgang der katalytischen Vorrichtung (9) zu messen; und
    - Mitteln, um eine Diagnose über den Zustand der Falle (12) zu erstellen,

    **dadurch gekennzeichnet, dass** die Mittel zur Erstellung der Diagnose dafür eingerichtet sind, um:

    - einen augenblicklichen Wirkungsgrad ($\varepsilon$) der Falle (12) zu bestimmen;
    - den augenblicklichen Wirkungsgrad ($\varepsilon$) der Falle (12) mit dem augenblicklichen Wirkungsgrad ($\varepsilon_{poll}$) einer ersten Referenzfalle (18) zu vergleichen;
    - den augenblicklichen Wirkungsgrad ($\varepsilon$) der Falle (12) mit dem augenblicklichen Wirkungsgrad ($\varepsilon_{OBD}$) einer zweiten Referenzfalle (19) zu vergleichen; und
    - eine Diagnose über den Zustand der Falle (12) zu erstellen, ausgehend von:

        - einem ersten Diagnosekriterium ($C_1$), welches gleich dem Prozentsatz der Dauer (t) der Diagnose ist, während der der augenblickliche Wirkungsgrad ($\varepsilon$) der Falle (12) größer als der augenblickliche Wirkungsgrad ($\varepsilon_{poll}$) der ersten Referenzfalle (18) ist; und
        - einem zweiten Diagnosekriterium ($C_2$), welches gleich dem Prozentsatz der Dauer (t) der Diagnose ist, während der der augenblickliche Wirkungsgrad ($\varepsilon$) der Falle (12) zwischen dem augenblicklichen Wirkungsgrad ($\varepsilon_{OBD}$) der zweiten Referenzfalle (19) und dem augenblicklichen Wirkungsgrad ($\varepsilon_{poll}$) der ersten Referenzfalle (18) liegt.

12. Motor nach Anspruch 11, **dadurch gekennzeichnet, dass** die Mittel zur Erstellung der Diagnose dafür eingerichtet sind, um den augenblicklichen Wirkungsgrad ($\varepsilon$) der Falle (12), den augenblicklichen Wirkungsgrad ($\varepsilon_{poll}$) der ersten Referenzfalle (18) und den augenblicklichen Wirkungsgrad ($\varepsilon_{OBD}$) der zweiten Referenzfalle (19) während einer Betriebsphase des Motors (1) bei magerem Gemisch zu bestimmen.

13. Motor nach Anspruch 11 oder 12, **dadurch gekennzeichnet, dass** die Mittel zur Erstellung der Diagnose dafür eingerichtet sind, um:

    - das erste Diagnosekriterium ($C_1$) mit einem ersten, vorgegebenen Diagnoseschwellenwert ($S_1$) und einem zweiten, vorgegebenen Diagnoseschwellenwert ($S'_1$) zu vergleichen; und
    - das zweite Diagnosekriterium ($C_2$) mit einem dritten, vorgegebenen Diagnoseschwellenwert ($S_2$) zu vergleichen.

14. Motor nach Anspruch 11, 12 oder 13, **dadurch gekennzeichnet, dass** die Mittel zur Erstellung der Diagnose dafür eingerichtet sind, um den augenblicklichen Wirkungsgrad ($\varepsilon$) der Falle (12) ausgehend von Konzentrationswerten von Stickoxiden $[NO_x]_{in}$, $[NO_x]_{out}$ am Eingang und am Ausgang einer katalytischen Vorrichtung (9) zu berechnen.

15. Motor nach einem der Ansprüche 11 bis 14, **dadurch gekennzeichnet, dass** die Mittel zur Erstellung der Diagnose dafür eingerichtet sind, um die Werte des augenblicklichen Wirkungsgrades ($\varepsilon_{poll}$, $\varepsilon_{OBD}$) der beiden Referenzfallen (18, 19) ausgehend von Kartographien in Abhängigkeit eines Parametersatzes zu bestimmen, welcher mindestens die Temperatur ($\theta_{NT}$) der Falle, den Durchsatz an Auspuffgas ($Q_{ech}$) des Motors, welches die Falle durchquert, die Konzentration an Stickoxiden $[NO_x]_{in}$ am Eingang der katalytischen Vorrichtung (9), die Anreicherung (r) des Kraftstoff/Luft-Gemisches des Motors (1) und die Masse der in der Falle enthaltenen Stickoxide ($M_{NOx}$) aufweist.

16. Motor nach Anspruch 15, **dadurch gekennzeichnet, dass** er mit einem Temperatursensor (14) der Falle (12) verknüpft ist.

**Claims**

1. Method for diagnosing a nitrogen oxides trap (12) able to store nitrogen oxides emitted by a motor vehicle internal combustion engine (1), **characterized in that** it comprises at least steps consisting in:

   - determining the instantaneous efficiency ($\varepsilon$) of the trap (12);
   - comparing the instantaneous efficiency ($\varepsilon$) of the trap (12) with the instantaneous efficiency ($\varepsilon_{poll}$) of a first reference trap (18);
   - comparing the instantaneous efficiency ($\varepsilon$) of the trap (12) with the instantaneous efficiency ($\varepsilon_{OBD}$) of a second reference trap (19); and
   - establishing a diagnosis on the state of the trap (12) from:

     • a first diagnostics criterion ($C_1$) equal to the percentage of the duration (t) of the diagnosis for which the instantaneous efficiency ($\varepsilon$) of the trap (12) is greater than the instantaneous efficiency ($\varepsilon_{poll}$) of the first reference trap (18); and
     • a second diagnostics criterion ($C_2$) equal to the percentage of the duration (t) of the diagnosis for which the instantaneous efficiency ($\varepsilon$) of the trap (12) is comprised between the instantaneous efficiency ($\varepsilon_{OBD}$) of the second reference trap (19) and the instantaneous efficiency ($\varepsilon_{poll}$) of the first reference trap (18).

2. Method according to Claim 1, in which the instantaneous efficiency ($\varepsilon$) of the trap (12), the instantaneous efficiency ($\varepsilon_{poll}$) of the first reference trap (18) and the instantaneous efficiency ($\varepsilon_{OBD}$) of the second reference trap (19) are determined during a lean-burn phase of operation of the engine (1).

3. Method according to Claim 1 or 2, in which the step of establishing the diagnosis comprises steps consisting in:

   - comparing the first diagnostics criterion ($C_1$) with a first predetermined diagnostics threshold ($S_1$) and with a second predetermined diagnostics threshold ($S'_1$); and
   - comparing the second diagnostics criterion ($C_2$) with a third predetermined diagnostics threshold ($S_2$).

4. Method according to Claim 1, 2 or 3, in which the instantaneous efficiency ($\varepsilon$) of the trap (12) is calculated from nitrogen oxide concentration values $[NO_x]_{in}$, $[NO_x]_{out}$ at the inlet and outlet of a catalytic device (9) containing the trap (12).

5. Method according to Claim 4, **characterized in that** the nitrogen oxides concentration $[NO_x]_{out}$ at the inlet of the catalytic device (9) is measured by a nitrogen oxide sensor (16).

6. Method according to Claim 4 or 5, **characterized in that** the nitrogen oxides concentration $[NO_x]_{in}$ at the outlet of the catalytic device (9) is measured by a nitrogen oxides sensor (15) or determined from a map as a function of a set of parameters comprising at least the speed (N) of the engine (1), the torque (C) of the engine (1) and a value indicative of the temperature ($\theta_{mot}$) of the engine (1).

7. Method according to any one of Claims 4 to 6, **characterized in that** the instantaneous efficiency values ($\varepsilon_{poil}$, $\varepsilon_{OBD}$) of the two reference traps (18, 19) are determined from maps as a function of a set of parameters comprising at

least the temperature ($\theta_{NT}$) of the trap, the flow rate of engine exhaust gas ($\theta_{exh}$) passing through the trap, the nitrogen oxides concentration $[NO_x]_{in}$ at the inlet of the catalytic device (9), the richness (r) of the fuel/air mixture of the engine (1) and the mass of nitrogen oxides ($M_{NOx}$) contained in the trap.

8. Method according to any one of Claims 3 to 7, **characterized in that** the first diagnostics threshold ($S_1$) is substantially equal to 0.7.

9. Method according to any one of Claims 3 to 8, **characterized in that** the second diagnostics threshold ($S'_1$) is substantially equal to 0.12.

10. Method according to any one of Claims 3 to 9, **characterized in that** the third diagnostics threshold ($S_2$) is greater than 0.5.

11. Motor vehicle internal combustion engine (1) associated with:

    - a nitrogen oxides trap (12) contained in a catalytic device (9) and storing the nitrogen oxides;
    - means (15) of determining the nitrogen oxides concentration $[NO_x]_{in}$ at the inlet of the catalytic device (9); and
    - a nitrogen oxides sensor (16) positioned downstream of the catalytic device (9), able to measure the nitrogen oxides concentration $[NO_x]_{out}$ at the outlet of the catalytic device (9); and
    - means of establishing a diagnosis regarding the state of the trap (12),

    **characterized in that** the means of establishing the diagnosis are designed for:

    - determining an instantaneous efficiency value ($\varepsilon$) of the trap (12);
    - comparing the instantaneous efficiency ($\varepsilon$) of the trap (12) with the instantaneous efficiency ($\varepsilon_{poll}$) of a first reference trap (18);
    - comparing the instantaneous efficiency ($\varepsilon$) of the trap (12) with the instantaneous efficiency ($\varepsilon_{OBD}$) of a second reference trap (19); and
    - establishing the diagnosis on the state of the trap (12) from:

        • a first diagnostics criterion ($C_1$) equal to the percentage of the duration (t) of the diagnosis for which the instantaneous efficiency ($\varepsilon$) of the trap (12) is greater than the instantaneous efficiency ($\varepsilon_{poll}$) of the first reference trap (18); and
        • a second diagnostics criterion ($C_2$) equal to the percentage of the duration (t) of the diagnosis for which the instantaneous efficiency ($\varepsilon$) of the trap (12) is comprised between the instantaneous efficiency ($\varepsilon_{OBD}$) of the second reference trap (19) and the instantaneous efficiency ($\varepsilon_{poll}$) of the first reference trap (18).

12. Engine according to Claim 11, **characterized in that** the means of establishing the diagnosis are designed for determining the instantaneous efficiency ($\varepsilon$) of the trap (12), the instantaneous efficiency ($\varepsilon_{poll}$) of the first reference trap (18) and the instantaneous efficiency ($\varepsilon_{OBD}$) of the second reference trap (19) during a lean-burn phase of operation of the engine (1).

13. Engine according to Claim 11 or 12, **characterized in that** the means of establishing the diagnosis are designed for:

    - comparing the first diagnostics criterion ($C_1$) with a first predetermined diagnostics threshold ($S_1$) and with a second predetermined diagnostics threshold ($S'_1$); and
    - comparing the second diagnostics criterion (C2) with a third predetermined diagnostics threshold ($S_2$).

14. Engine according to Claim 11, 12 or 13, **characterized in that** the means of establishing the diagnosis are designed for calculating the instantaneous efficiency ($\varepsilon$) of the trap (12) as a function of the nitrogen oxides concentration values $[NO_x]_{in}$, $[NO_x]_{out}$ at the inlet and outlet of a catalytic device (9).

15. Engine according to any one of Claims 11 to 14, **characterized in that** the means of establishing the diagnosis are designed for determining the instantaneous efficiency values ($\varepsilon_{poll}$, $\varepsilon_{OBD}$) of the two reference traps (18, 19) from maps as a function of a set of parameters comprising at least the temperature ($\theta_{NT}$) of the trap, the flow rate ($Q_{exh}$) of engine exhaust gas passing through the trap, the nitrogen oxides concentration $[NO_x]_{in}$ at the inlet of the catalytic device (9), the richness (r) of the fuel/air mixture of the engine (1) and the mass of nitrogen oxides ($M_{NOx}$) contained in the trap.

**16.** Engine according to Claim 15, **characterized in that** it is associated with a temperature sensor (14) sensing the temperature of the trap (12).

**Fig. 1**

**Fig. 2**

$$\varepsilon_{poll} = \varepsilon_{poll}\ (\vartheta_{NT}\ ;\ Q_{ech}\ ;\ [NO_x]_{in}\ ;\ r\ ;\ M_{NOx})$$

$$\varepsilon_{OBD} = \varepsilon_{OBD}\ (\vartheta_{NT}\ ;\ Q_{ech}\ ;\ [NO_x]_{in}\ ;\ r\ ;\ M_{NOx})$$

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916017
- FR 2940356
- FR 2939841